# EUROPÄISCHE PATENTSCHRIFT

(11) **EP 1 077 827 B1**
(45) Veröffentlichungstag und Bekanntmachung des Hinweises auf die Patenterteilung: **06.03.2002**
(21) Anmeldenummer: 99920752.5
(22) Anmeldetag: 23.04.1999
(51) Int. Cl.: B60K 31/04

(54) **FAHRZEUGMOTORSTEUERUNGSVORRICHTUNG MIT REGELUNG UND/ODER BEGRENZUNG DER FAHRGESCHWINDIGKEIT**
MOTOR VEHICLE CONTROL DEVICE WITH REGULATION AND/OR LIMITATION OF DRIVING SPEED
DISPOSITIF DE COMMANDE DE MOTEUR DE VEHICULE AVEC REGULATION ET/OU LIMITATION DE LA VITESSE DE ROULEMENT

(30) Priorität: 09.05.1998 DE 19820830
(43) Veröffentlichungstag der Anmeldung: 28.02.2001
(73) Patentinhaber: DaimlerChrysler AG, 70567 Stuttgart (DE); SIEMENS AKTIENGESELLSCHAFT, 80333 München (DE)
(72) Erfinder: SAUR, Jörg, D-73054 Eislingen (DE); KIRCHBERGER, Andreas, D-93161 Sinzing (DE)
(86) Internationale Anmeldenummer: EP9902737
(87) Internationale Veröffentlichungsnummer: WO9958360

(56) Entgegenhaltungen:
- EP-A- 0 299 235
- DE-C- 4 439 424
- US-A- 5 625 558
- FRITZ H: "MODELLGESTUETZTE NEURONALE GESCHWINDIGKEITSREGELUNG VON KRAFTFAHRZEUGEN" AUTOMATISIERUNGSTECHNIK - AT, Bd. 44, Nr. 5, 1. Mai 1996 (1996-05-01), Seiten 252-257, XP000583468 ISSN: 0178-2312

## Beschreibung

Die Erfindung bezieht sich auf eine Fahrzeugmotorsteuerungsvorrichtung mit einem fahrerbetätigten Motorbetriebsvorgabe-Bedienelement sowie mit einer Geschwindigkeitsregelungsstufe und/oder einer Geschwindigkeitsbegrenzungsstufe, welche die Fahrgeschwindigkeit unter Verwendung eines motorleistungsbezogenen Sollvorgabesignals und Abgabe eines motorleistungsbezogenen Stellsignals regelt bzw. begrenzt (DE 44 39 424 C1).

Derartige Fahrzeugmotorsteuerungsvorrichtungen sind in verschiedenen Ausprägungen bekannt. Das Motorbetriebsvorgabe-Bedienelement dient dem Fahrer dazu, den Motorbetrieb in einer gewünschten Weise zu beeinflussen, d.h. einen gewünschten Motorbetriebszustand anzufordern. Traditionell ist dieses Bedienelement ein Fahrpedal, das vom Fahrer ausgelenkt werden kann und dessen Auslenkung den vom Fahrer gewünschten Motorbetriebszustand repräsentiert. Bei dem am meisten verbreiteten, herkömmlichen Systemtyp, wie er traditionell bei Kraftfahrzeug-Verbrennungsmotoren mit Drosselklappe zum Einsatz kommt, wird die Fahrpedalauslenkung als entsprechende Vorgabe der Drosselklappenstellung und damit als ein motorleistungsbezogenes Einstellsignal interpretiert, z.B. in Form der klassischen mechanischen Kopplung von Fahrpedal und Drosselklappe. Dementsprechend arbeiten Geschwindigkeitsregelungseinheiten und Geschwindigkeitsbegrenzungseinheiten, wie sie z.B. von der Anmelderin unter den Bezeichnungen Tempomat und Speedtronic eingesetzt werden, auf der Ebene einer Drosselklappenstellungsvorgabe und damit motorleistungsbezogen, indem ihnen die Fahrpedalstellungsinformation als motorleistungsbezogenes Sollvorgabesignal zugeführt wird und sie ein motorleistungsbezogenes Stellsignal zur Regulierung der Drosselklappenstellüng und gegebenenfalls weiterer Motorleistungskenngrößen, insbesondere die Kraftstoffeinspritzparameter, derart abgeben, daß die Fahrgeschwindigkeit auf einen gewünschten Sollwert eingeregelt bzw. begrenzt wird. Ein Beispiel einer solchen Vorrichtung findet sich in der Offenlegungsschrift DE 37 10 891 A1. Eine weitere Geschwindigkeitsregelung dieses herkömmlichen Typs, die besonders für einen Otto- oder Diesel-Motor mit Einspritzung geeignet ist, ist in der schon oben zitierten Patentschrift DE 44 39 424 C1 beschrieben.

Diese herkömmliche Regelung und/oder Begrenzung der Fahrgeschwindigkeit auf Drosselklappenstellungs- und damit Motorleistungsebene hat einen selbststabilisierenden Effekt. Denn mit einer Drehzahlerhöhung verringert sich die Zylinderfüllung mit Verbrennungsluft, wodurch das Motormoment abnimmt und sich folglich die Leistung reduziert, während sich bei Drehzahlabnahme die Zylinderfüllung erhöht und dadurch das Motormoment und folglich die Motorleistung ansteigt. Mit diesem Verhalten wirkt somit der Motor eigenständig gleichsinnig zur Regelung bzw. Begrenzung der Fahrgeschwindigkeit im Sinne einer Gegenkopplung, indem das eingestellte Motormoment reduziert wird, wenn das Fahrzeug zu schnell wird, während das Motormoment erhöht wird, wenn das Fahrzeug zu langsam wird. Da sich die Fahrgeschwindigkeit über den Umfang der Fahrzeugräder sowie über die Achs- und Getriebeübersetzungen auf die Motordrehzahl zurückführen läßt, sind Regel- und Begrenzungssysteme für die Fahrzeuggeschwindigkeit letztlich Drehzahlregelsysteme bzw.-begrenzungssysteme. Die Vorgabe einer gewünschten Soll-bzw. Grenzgeschwindigkeit bedeutet folglich die Vorgabe einer entsprechenden konstanten Motordrehzahl, was bedeutet, daß in den erwähnten, klassischen drosselklappenstellungsbezogenen Systemen die Drosselklappenstellung und damit auch die abhängige Größe Motormoment proportional zur Geschwindigkeitsregelabweichung eingestellt werden, wobei der gesamte Einstellbereich verfügbar ist. Die eindeutige Zuordnung zwischen dem von der Regelung bzw. Begrenzung abgegebenen Stellsignal zur gewünschten Motorleistung ist somit gegeben.

In jüngerer Zeit werden vermehrt Fahrzeugmotorsteuerungsvorrichtungen in Betracht gezogen, die auf Motormomentenebene, d.h. mit einer Momentenstruktur, arbeiten, was bedeutet, daß die Einstellung am Motorbetriebsvorgabe-Bedienelement, z.B. einem Fahrpedal, als Fahrerwunsch nach einem bestimmten Motormoment und nicht nach einer bestimmten Drosselklappenstellung bzw. Motorleistung gewertet wird. Bei diesen neuerdings vermehrt betrachteten Motorsteuerungen auf Basis einer Motormomentenvorgabe wird erst am Schluß der Motorsteuerungs-Wirkungskette eine zum Fahrerwunsch, wie er durch die Betätigung des Motorbetriebsvorgabe-Bedienelementes zum Ausdruck kommt, passende Drosselklappenstellung oder eine äquivalente Motorleistungskenngröße ermittelt, meist anhand eines geeigneten Motormodells. Die Betätigung des Motorbetriebsvorgabe-Bedienelementes hat daher keinen direkten Bezug mehr zur Drosselklappenstellung, wobei hierunter im folgenden auch eine jeweils andere, äquivalente Motorleistungskenngröße gemeint ist, insbesondere im Fall eines Motors ohne Drosselklappe.

Dies hat erschwerende Auswirkungen für Systeme mit selbsttätiger Regelung und/oder Begrenzung der Fahrgeschwindigkeit. Denn einer konstanten Momentenvorgabe können in weiten Bereichen beliebige Motordrehzahlen zugeordnet werden. Wenn nun der Motor bei der aktuellen Momentenvorgabe eine bestimmte Drehzahl zu halten vermag, z.B. weil der Fahrwiderstand keine Geschwindigkeitsabnahme erzwingt, so kann dies dazu führen, daß die Fahrzeuggeschwindigkeit innerhalb eines für eine präzise Geschwindigkeitsregelung inakzeptabel weiten Bereichs liegt. Zudem hat eine konstante Momentenvorgabe zur Folge, daß bei einer Drehzahlzunahme, bei der das Moment abnehmen würde, die Momentenabnahme durch eine stetige Drosselklappenöffnung kompensiert wird, um die Momentenvorgabe einzuhalten. Obwohl das Fahrzeug schneller wird, wird daher die Drosselklappe weiter geöffnet, so daß sich bei der Geschwindigkeitsregelung die Regelabweichung zunächst verstärkt, d.h. es entsteht ein Mitkopplungseffekt in positiver Richtung. Analog entsteht ein Mitkopplungseffekt in negativer Richtung im Fall einer Drehzahlabnahme, bei der das Moment zunehmen würde, was jedoch durch eine stetige Schließung der Drosselklappe zwecks Einhaltung der Momentenvorgabe kompensiert wird, d.h. die Drosselklappe wird weiter geschlossen, obwohl das Fahrzeug langsamer wird, so daß sich auch hier die Regelabweichung der Geschwindigkeitsregelung verstärkt. Ohne weitere Maßnahmen wirkt daher der Motor bei solchen Motorsteuerungen auf Momentenbasis eigenständig gegensinnig zu einer herkömmlichen Regelung und/oder Begrenzung der Fahrgeschwindigkeit auf Drosselkappenstellungs- bzw. Motorleistungsbasis, wodurch eine stabile Geschwindigkeitsregelung bzw. -begrenzung nicht gewährleistet ist.

Bei einem in der Offenlegungsschrift EP 0 299 235 A2 beschriebenen Kraftfahrzeug mit Geschwindigkeitsregeleinrichtung wird die Betätigung des Fahrpedals als Vorgabe einer gewünschten Fahrgeschwindigkeit interpretiert.

Der Erfindung liegt als technisches Problem die Bereitstellung einer Fahrzeugmotorsteuerungsvorrichtung der eingangs genannten Art zugrunde, die einerseits auf Momentenebene arbeitet und andererseits eine zufriedenstellende Regelung und/oder Begrenzung der Fahrgeschwindigkeit ermöglicht.

Die Erfindung löst dieses Problem durch die Bereitstellung einer Fahrzeugmotorsteuerungsvorrichtung mit den Merkmalen des Anspruchs 1 oder 2, wobei sich die Vorrichtung nach Anspruch 1 speziell auf eine Geschwindigkeitsregelung und diejenige nach Anspruch 2 speziell auf eine Geschwindigkeitsbegrenzung beziehen. In beiden Fällen ist eine Momentenkennfeldstufe vorgesehen, die abhängig von der Betätigung des Motorbetriebsvorgabe-Bedienelementes, üblicherweise eines Fahrpedals, und einer Motordrehzahlinformation ein motormomentenbezogenes Sollvorgabesignal abgibt. Der am Bedienelement vom Fahrer zum Ausdruck gebrachte Motorbetriebszustandswunsch wird auf diese Weise als ein Momentenwunsch interpretiert, d.h. die Motorsteuerung arbeitet auf Momentenbasis bzw. bildet eine Momentenstruktur. Die Vorrichtung nach Anspruch 1 beinhaltet eine Geschwindigkeitsregelstufe herkömmlicher Art, die auf Drosselklappenstellungsebene, d.h. Motorleistungsebene, arbeitet. Analog beinhaltet die Vorrichtung nach Anspruch 2 eine herkömmliche, auf Drosselklappenstellungsebene arbeitende Geschwindigkeitsbegrenzungsstufe.

Charakteristischerweise ist der Eingangsseite der Geschwindigkeitsregelstufe bzw. der Geschwindigkeitsbegrenzungsstufe eine Moment/Leistung-Kennfeldstufe zugeordnet, die dazu dient, das von der Momentenkennfeldstufe aus dem Motorbetriebsvorgabe-Bedienelementsignal erzeugte motormomentbezogene Sollvorgabesignal in ein dazu passendes motorleistungsbezogenes und damit drosselklappenstellungsbezogenes Sollvorgabesignal zu transformieren, das dann von der anschließenden, auf Drosselklappenstellungs- und damit Motorleistungsebene arbeitenden Geschwindigkeitsregelstufe bzw. Geschwindigkeitsbegrenzungsstufe in herkömmlicher Weise verarbeitet werden kann. Entsprechend ist der Ausgangsseite der Geschwindigkeitsregel- bzw. Geschwindigkeitsbegrenzungsstufe eine Leistung/Moment-Kennfeldstufe zugeordnet, die dem Inversen der eingangsseitigen Moment/LeistungKennfeldstufe entspricht und für die Transformation des von der Geschwindigkeitsregel- bzw. Geschwindigkeitsbegrenzungsstufe auf Drosselklappenstellungs-, d.h. Motorleistungsebene abgegebenen Stellsignals in ein solches auf Motormomentenebene sorgt.

Insgesamt ist damit eine in herkömmlicher Weise auf Motorleistungsebene arbeitende Geschwindigkeitsregel- und/oder Geschwindigkeitsbegrenzungsstufe an günstiger Stelle in die Momentenstruktur einer auf Motormomentenebene arbeitenden Motorsteuerung eingebettet. Die Einbettung hinter der Momentenkennfeldstufe bedingt zwar die Verwendung der Moment/Leistung- und der Leistung/Moment-Kennfeldstufe, sie ermöglicht jedoch die korrektive Berücksichtigung der destabilisierenden Eigenschaften der nachfolgenden Motorsteuerungs-Wirkungskette in deren Kennfeldern. Außerdem bleibt dadurch die Wirkungskette der Geschwindigkeitsregel-bzw. Geschwindigkeitsbegrenzungsstufe von der Applikation eines die Fahrcharakteristik bestimmenden FahrpedalKennfeldes abgekoppelt, so daß sich eine Änderung dieser Fahrcharakteristik nicht auf eine vorangegangene Applikation der Geschwindigkeitsregel- bzw. Geschwindigkeitsbegrenzungsstufe auswirkt und folglich wechselweise Abhängigkeiten vermieden werden. Vorteilhaft ist des weiteren, daß für die Geschwindigkeitsregelstufe und die Geschwindigkeitsbegrenzungsstufe die äußerst bewährten, herkömmlichen, auf Motorleistungsebene arbeitenden Regler- bzw. Begrenzerstrukturen unverändert übernommen werden können, unabhängig davon, von welchem Luftsteuerungstyp der Motor ist, und unabhängig davon, welche Größe als Regelgröße herangezogen wird, wenn das Motormoment keine geeignete Regelgröße darstellt. Außerdem kann die Momentenstruktur der Motorsteuerung ganz nach motorischen Gesichtspunkten gestaltet und optimiert werden, ohne daß hierfür Beschränkungen durch die Geschwindigkeitsregelung bzw. -begrenzung bestehen. Die Streckenverstärkung der Regelstrecke für die Regelung bzw. Begrenzung der Geschwindigkeit ist diejenige auf Drosselklappenstellungsebene, die unabhängig vom Reglertyp höher als auf der Momentenebene ist.

Eine nach Anspruch 3 weitergebildete Fahrzeugmotorsteuerungsvorrichtung beinhaltet sowohl eine Geschwindigkeitsregelung als auch parallel dazu eine Geschwindigkeitsbegrenzung, wobei an der Ausgangsseite der Geschwindigkeitsregelstufe und der Geschwindigkeitsbegrenzungsstufe in geeigneter Weise eine Maximalauswahleinheit und eine Minimalauswahleinheit vorgesehen sind. Die Maximalauswahleinheit läßt ein Überspielen der Geschwindigkeitsregelung durch entsprechende Fahrerbetätigung des Motorbetriebsvorgabe-Bedienelementes zu, während die Minimalauswahleinheit die Nichtüberschreitung einer gewählten Grenzgeschwindigkeit gewährleistet.

Eine nach Anspruch 4 weitergebildete Fahrzeugmotorsteuerungsvorrichtung beinhaltet zusätzlich eine elektrische Getriebesteuerung, die vorteilhafterweise bei aktiver Geschwindigkeitsregelung oder Geschwindigkeitsbegrenzung auf der Basis des ausgangsseitig der Geschwindigkeitsregel-bzw. Geschwindigkeitsbegrenzungsstufe auf Momentenebene vorliegenden Motormomentstellwertes arbeitet, wozu letzterer von einer zur Momentenkennfeldstufe inversen Kennfeldstufe in ein Getriebesteuerungs-Vorgabesignal auf der Ebene der Betätigungsgröße des Motorbetriebsvorgabe-Bedienelementes transformiert wird. Bei inaktiver Geschwindigkeitsregelung und Geschwindigkeitsbegrenzung wird das Getriebesteuerungs-Vorgabesignal in herkömmlicher Weise direkt vom Betätigungssignal dieses Bedienelementes geliefert, d.h. in jedem Fall stets auf Motorleistungsebene.

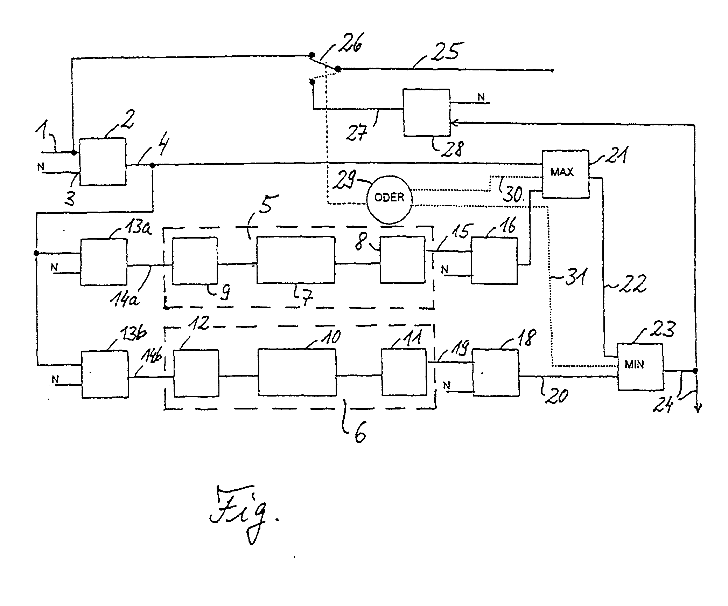

Eine vorteilhafte Ausführungsform der Erfindung ist in der Zeichnung dargestellt und wird nachfolgend beschrieben.

Die einzige Figur zeigt ein Blockschaltbild des erfindungswesentlichen Teils einer Fahrzeugmotorsteuerungsvorrichtung mit Geschwindigkeitsregelungs- und Geschwindigkeitsbegrenzungsfunktionalität.

Die in der Figur mit ihrem hier interessierenden Teil gezeigte Fahrzeugmotorsteuerungsvorrichtung ist von dem Typ, der auf einer Momentenvorgabe basiert, aus der erst am Schluß der Motorsteuerungswirkungskette ein motorleistungsbezogenes Stellsignal, wie ein Drosselklappensollstellungssignal, errechnet wird. Die vom Fahrer vorgebbare Motorbetriebsvorgabe ist somit eine Motormomentenvorgabe, wobei als Motorbetriebsvorgabe-Bedienelement wie üblich ein nicht gezeigtes Fahrpedal dient. Eine solche Motorsteuerung auf Momentenebene hat gewisse Vorteile, z.B. in Verbindung mit Antriebsschlupfregelungen und elektronischen Fahrstabilitätssystemen, wie das von der Anmelderin unter der Abkürzung ESP eingesetzte System. Um die Fahrpedalstellung auf die Momentenebene zu transformieren, wird sie von einem nicht gezeigten Fahrpedalstellungssensor erfaßt, dessen Ausgangssignal als Fahrpedalstellungssignal 1 einem ersten Eingang einer Momentenkennfeldstufe 2 zugeführt wird, die an einem zweiten Eingang 3 ein Informationssignal über die Motordrehzahl N empfängt. In Abhängigkeit von diesen beiden Eingangsgrößen berechnet die Momentenkennfeldstufe 2 anhand eines in ihr abgelegten Kennfeldes mit progressivem Verlauf, das auf Fahrbarkeit und gute Dosierbarkeit des Motormomentes ausgelegt ist, die zugehörige Momentenvorgabe, d.h. das vom Fahrer momentan über das Fahrpedal angeforderte Motormoment, und gibt ein entsprechendes Motormomentvorgabesignal (Sollvorgabesignal) 4 ab.

Die Fahrzeugmotorsteuerungsvorrichtung beinhaltet eine herkömmliche Geschwindigkeitsregelstufe 5, d.h. einen Tempomat, und parallel dazu eine herkömmliche Geschwindigkeitsbegrenzungsstufe 6, wie eine Speedtronic. Die Geschwindigkeitsregelstufe 5 besteht aus der eigentlichen Reglereinheit 7, einer ausgangsseitig anschließenden Progressionsfaktorstufe 8 und einer eingangsseitig vorgeschalteten Degressionsfaktorstufe 9. In analoger Weise besteht die Geschwindigkeitsbegrenzungsstufe 6 aus der eigentlichen Begrenzungsreglereinheit 10, der ausgangsseitig eine Progressionsfaktorstufe 11 nachgeschaltet und eingangsseitig eine Degressionsfaktorstufe 12 vorgeschaltet ist. Die beiden Progressionsfaktorstufen 8, 11 von Geschwindigkeitsregel- und Geschwindigkeitsbegrenzungsstufe 5 und 6 sind vorzugsweise identisch, analog dazu auch die beiden Degressionsfaktorstufen 9, 12. Die jeweilige Progressionsfaktorstufe 8, 11 dient dazu, das eingangsseitig zugeführte Reglerausgangssignal mit einem geeigneten Faktor zu multiplizieren, der anhand einer abgelegten Kennlinie mit progressivem Verlauf in Abhängigkeit vom Reglerausgangssignal bestimmt wird. Dies dient zur geeigneten Verstärkung des Reglersignals. Der progressive Verlauf entspricht dem Verlauf der Motorleistungsbedarfscharakteristik. Der Grund für die Verwendung der Progressionsfaktorstufe 8, 11 liegt darin, daß diese Motorleistungsbedarfscharakteristik typischerweise merklich nichtlinear ist, während das Verhalten der vorgeschalteten Reglereinheiten im wesentlichen linear ist. Die jeweilige Degressionsfaktorstufe 9, 12 dient der eingangsseitigen Invertierung dieses Vorgangs, d.h. das der zugehörigen Reglereinheit 7, 10 zugeführte Eingangssignal wird mit einem degressiven Faktor multipliziert, der dem Inversen des Faktors der ausgangsseitigen Progressionsfaktorstufe 8, 11 entspricht, wozu in den Degressionsfaktorstufen 9, 12 entsprechend inverse Kennlinien abgelegt sind.

Die Geschwindigkeitsregel- und die Geschwindigkeitsbegrenzungsstufe 5, 6 arbeiten entsprechend der herkömmlichen Systemauslegung auf Motorleistungs-, d.h. Drosselklappenstellungsebene und eignen sich daher aus den oben genannten Gründen nicht zum direkten Anschluß an das auf Momentenebene befindliche Motormomentvorgabesignal 4. Als Abhilfe ist vor der Geschwindigkeitsregelstufe 5 und der Geschwindigkeitsbegrenzungsstufe 6 je eine Moment/Leistung-Kennfeldstufe 13a, 13b vorgesehen, die zueinander identisch sind und denen über einen ersten Eingang das Momentenvorgabesignal 4 zugeführt wird, während sie über einen zweiten Eingang die Motordrehzahlinformation N erhalten. Die jeweilige Moment/Leistung-Kennfeldstufe 13a, 13b ermittelt nun anhand eines geeignet abgelegten Kennfeldes ein motorleistungsbezogenes Ausgangssignal (Sollvorgabesignal) 14a, 14b in Abhängigkeit vom momentanen Momentenwunsch 4 und der Motordrehzahl N. Die Moment/Leistung-Kennfeldstufe 13a, 13b sorgt folglich für eine Rückwandlung des sich auf Momentenebene befindenden Sollvorgabesignals 4 auf die Fahrpedalstellungs- bwz. Motorleistungsebene. In erster Näherung kann das hierzu in ihr abgelegte Motor/Leistung-Kennfeld als das Inverse des Kennfeldes angesehen werden, welches in der Momentenkennfeldstufe 2 abgelegt ist. In einer verbesserten Systemauslegung werden in der Moment/Leistung-Kennfeldstufe 13a, 13b zusätzlich Instabilitäten der nachfolgenden Motorsteuerungsstruktur geeignet berücksichtigt, so daß das entsprechend vorgegebene Kennfeld im allgemeinen nicht exakt dem inversen Kennfeld der Momentenkennfeldstufe 2 entspricht. Derartige Regelinstabilitäten werden insbesondere durch die Wechselwirkung des progressiv verlaufenden, drehzahlbewerteten Kennfeldes für die Umsetzung von der Fahrpedalstellungsebene auf die Motormomentenebene mit einem Luftmassensollwert-Kennfeld erzeugt, anhand dessen für den ermittelten Momentenwunsch der geeignete Luftmassensollwert berechnet wird. Diese Instabilitäten lassen sich durch geeignet modifizierte Bedatung des in der Leistung/Moment-Kennfeldstufe 16 abgelegten (Stabilitäts-Kennfeldes beseitigen.

Mit dem Ausgangssignal 14a, 14b der Moment/Leistung-Kennfeldstufe 13a, 13b liegt ein Signal auf Motorleistungs-bzw. Drosselklappenstellungsebene vor, das den gegenwärtigen Motorbetriebswunsch des Fahrers auf dieser Ebene repräsentiert, wie dies herkömmlicherweise mit dem Fahrpedalstellungssignal der Fall ist, so daß dieses Ausgangssignal 14a, 14b ein für die Geschwindigkeitsregelstufe 5 und die Geschwindigkeitsbegrenzungsstufe 6 verwendbares Eingangssignal bildet. Da die Moment/Leistung-Kennfeldstufe 13a, 13b und die Degressionsfaktorstufe 9, 12 vor der Geschwindigkeitsreglereinheit 7 einerseits und vor der Begrenzungsreglereinheit 10 andererseits jeweils identisch sind, genügt statt der gezeigten Doppelverwendung alternativ der Einsatz nur jeweils einer Moment/Leistung-Kennfeldstufe und/oder Degressionsfaktorstufe 9, 12 gemeinsam für die Geschwindigkeitsreglereinheit 7 und die Begrenzungsreglereinheit 10.

Das von der Geschwindigkeitsregelstufe 5 abgegebene Reglerausgangssignal (Geschwindigkeitsregel-Stellsignal) 15 ist nun wieder von der Motorleistungsebene auf die Momentenebene zu transformieren, wozu eine Leistung/Moment-Kennfeldstufe 16 vorgesehen ist, der dieses Reglerausgangssignal 15 an einem ersten Eingang zugeführt ist, während sie über einen zweiten Eingang die Motordrehzahlinformation erhält. Die Leistung/Moment-Kennfeldstufe 16 erzeugt aus dem zugeführten Reglerausgangssignal 15 motordrehzahlbewertet anhand eines geeigneten, abgelegten Stabilitätskennfeldes das zugehörige Momenten-Geschwindigkeitsregel-Stell-signal 17, das den Einfluß der Geschwindigkeitsregelstufe 5 auf die Motormomentensteuerung repräsentiert. Das in der Leistung/Moment-Kennfeldstufe 16 abgelegte Kennfeld entspricht dem Inversen des in der eingangsseitigen Moment/Leistung-Kennfeldstufe 13a, 13b abgelegten Kennfeldes.

In gleicher Weise dient eine weitere, zu der bereits genannten Leistung/Moment-Kennfeldstufe 16 identische Leistung/Moment-Kennfeldstufe 18 an der Ausgangsseite der Begrenzerstufe 6 dazu, das von letzterer abgegebene Geschwindigkeitsbegrenzungs-Stellsignal 19 von der Motorleistungsebene auf die Momentenebene in ein Momenten-Geschwindigkeitsbegrenzungs-Stellsignal 20 motordrehzahlbewertet zu transformieren.

Das Momenten-Geschwindigkeitsregel-Stellsignal 17 ist einem ersten Eingang einer Maximalauswahlstufe 21 zugeführt, die über einen zweiten Eingang das Momentenvorgabesignal 4 empfängt und ausgangsseitig das größere der beiden Signale abgibt. Die Maximalauswahlstufe 21 gewährleistet somit, daß der Fahrer über das Fahrpedal die Wirkung der Geschwindigkeitsregelung überspielen kann, d.h. er kann das Fahrzeug über den Regelungseinfluß hinaus beschleunigen, wenn er das Fahrpedal entsprechend stark betätigt. Das von der Maximalauswahlstufe 21 abgegebene Ausgangssignal 22 wird einem ersten Eingang einer Minimalauswahlstufe 23 zugeführt, die an einem zweiten Eingang das Momenten-Geschwindigkeitsbegrenzungs-Stellsignal 20 empfängt und das kleinere der beiden Eingangssignale als Motormomentstellsignal 24 durchläßt. Die Minimalauswahlstufe 23 gewährleistet, daß kein höherer Motormomentenstellwert zur Geltung kommt als er durch die Geschwindigkeitsbegrenzungsstufe 6 erlaubt wird. Das Motormomentenstellsignal 24 wird dann einer nachfolgenden, hier nicht näher interessierenden Struktur der Motorsteuerungsvorrichtung zugeführt, die insbesondere ein Motormodell beinhaltet, in welches das Motormomentenstellsignal 24 eingeht, um den Luftmassensollwert für die Füllung der Motorzylinder sowie die diversen Kraftstoffeinspritzparameter zu berechnen und demgemäß die entsprechenen Betriebsparameter am Motor einzustellen.

Der Fahrzeugmotorsteuerungseinrichtung ist eine hier nicht weiter gezeigte elektronische Getriebesteuerung zugeordnet, der ein zugehöriges Getriebesollstellungssignal (Sollwertsignal) 25 von einem ansteuerbaren Schalter 26 zugeführt wird, der zwischen zwei Schalteingängen umschaltbar ist, von denen an den einen das Fahrpedalstellungssignal 1 und an den anderen das Ausgangssignal 27 einer Getriebesteuerungs-Kennfeldstufe 28 angelegt ist. Die Getriebesteuerungs-Kennfeldstufe 28 dient dazu, das auf Momentenebene befindliche Motormomentstellsignal 24 in das auf Fahrpedalebene liegende Ausgangssignal 27 für die Getriebesteuerung zu transformieren. Dazu empfängt die Getriebesteuerungs-Kennfeldstufe 28 neben dem Motormomentstellsignal 24 über einen zweiten Eingang die Motordrehzahlinformation und ermittelt aus dem Motormomentstellsignal 24 drehzahlbewertet das Getriebesteuerungs-Ausgangssignal 27 anhand eines zu demjenigen in der Momentenkennfeldstufe 2 inversen Kennfeldes, das somit der Abbildung eines Geschwindigkeitsreglersignales von Momenten- auf Fahrpedalebene für die Getriebesteuerung dient. Wenn weder die Geschwindigkeitsregelstufe 5, noch die Geschwindigkeitsbegrenzungsstufe 6 aktiv ist, läßt der Schalter 26 das Fahrpedalstellungssignal 1 als Getriebesolistellungssignal 25 durch. Wenn entweder die Geschwindigkeitsregelstufe 5 oder die Geschwindigkeitsbegrenzungsstufe 6 aktiv ist, wird der Schalter 26 von einer ODER-Stufe 29 in seine andere Position umgeschaltet, so daß das Getriebesollstellungssignal 25 vom Ausgangssignal 27 der Getriebesteuerungs-Kennfeldstufe 28 gebildet ist und die Getriebesteuerung in richtiger Weise auf die Motorsteuerungsmaßnahmen der Geschwindigkeitsregelstufe 5 bzw. der Geschwindigkeitsbegrenzungsstufe 6 reagieren kann. Um die Schaltersteuerung zu bewerkstelligen, wird der ODER-Stufe 29 über einen ersten Eingang von der Maximalauswahlstufe 21 ein Informationssignal 30 darüber zugeführt, ob die Maximalauswahlstufe 21 momentan das von der Geschwindigkeitsregelung erzeugte Signal 17 aktiv durchläßt. Gleichzeitig erhält die ODER-Stufe 29 über einen zweiten Eingang ein Informationssignal 31 von der Minimalauswahlstufe 23 darüber, ob letztere momentan das von der Geschwindigkeitsbegrenzung erzeugte Signal 20 aktiv durchläßt.

Wie gezeigt, sind die Geschwindigkeitsregelstufe 5 und die Geschwindigkeitsbegrenzungsstufe 6 in Steuersignalrichtung hinter der Momentenkennfeldstufe 2 angeordnet. Dies hat trotz der sich dadurch ergebenden Notwendigkeit der Moment/Leistung-Kennfeldstufe 13a, 13b wesentliche Vorteile gegenüber einer denkbaren, direkten Anbindung der Geschwindigkeitsregelstufe 5 bzw. der Geschwindigkeitsbegrenzungsstufe 6 an das Fahrpedalstellungssignal 1. Denn in letzterem Fall könnten die oben erwähnten, destabilisierenden Eigenschaften der nachfolgenden Motorsteuerungs-Wirkungskette nicht korrigiert werden. Durch die Moment/Leistung- und Leistung/Moment-Kennfeldstufen 13a, 13b, 16, 18 sind die Wirkungspfade der beiden Reglereinheiten 7, 10 von der Applikation des Fahrpedalkennfeldes abgekoppelt, mit dem die Fahrcharakteristik bestimmt wird. Eine Änderung des Fahrpedalkennfeldes bzw. der Fahrcharakteristik bleibt dadurch ohne Auswirkung auf eine vorangegangene Applikation der Reglereinheiten 7, 10, und wechselweise Abhängigkeiten werden dadurch vermieden. Andererseits ist auch eine alternativ zum gezeigten Aufbau der Motorsteuerungsvorrichtung denkbare Änderung der Bedatung aller Kennfelder, die für das oben beschriebene, mit- statt gegenkoppelnde Verhalten bei Momenten- statt Leistungsvorgabe verantwortlich sind, nicht günstig. Es könnten dann zwar die Eigenschaften der Stabilität auf Drosselklappenstellungsebene erreicht werden, und die Reglereinheiten würden quasi drosselklappenstellungsorientiert arbeiten, jedoch würde dadurch verhindert, daß die Vorteile der Momentenstruktur hinsichtlich Verbesserung der Fahrdynamik genutzt werden können.

In Betriebsphasen ohne aktive Geschwindigkeitsregelung und Geschwindigkeitsbegrenzung verläuft der Motorsteuerungs-Wirkungspfad dergestalt, daß aus der vom Fahrer eingestellten Fahrpedalstellung über die Momentenkennfeldstufe 2 das Fahrerwunschmoment 4 gewonnen wird, das über die Maximalauswahlstufe 21 und die Minimalauswahlstufe 23 als Motormomentstellsignal 24 durchgelassen wird, um über die nachgeordneten, nicht gezeigten Funktionsblöcke und Kennfelder unter anderem die zugehörige Drosselklappenstellungsposition für den notwendigen Luftmassenstrom zu ermitteln und das entsprechende Motormoment einzustellen. Maßgeblichen Einfluß in dieser nachgeordneten Motorsteuerungsstruktur hat das bereits oben erwähnte Luftmassensollwert-Kennfeld, das aus der Momentenanforderung, wie sie durch das Motormomentstellsignal 24 repräsentiert wird, einen passenden Luftmassensollwert generiert. Bei aktiver Geschwindigkeitsregelung und/oder Geschwindigkeitsbegrenzung wird das Fahrerwunschmoment 4 über die Moment/Leistung-Kennfeldstufe 13a, 13b auf Fahrpedalstellungsebene rücktransformiert, wobei zusätzlich, wie erwähnt, Instabilitäten der nachfolgenden Steuerungsstruktur entgegengewirkt wird, wonach das resultierende Signal über die Degressionsfaktorstufe 9, 12 umgesetzt und der zugehörigen Reglereinheit 7, 10 als Initialisierungswert auf die Fahrpedalstellung zugeführt wird. Die Reglereinheit 7, 10 erzeugt ein Ausgangssignal in Abhängigkeit von der Gescchwindigkeitsregelabweichung bzw. der Abweichung der Istgeschwindigkeit von der vorgegebenen, begrenzenden Grenzgeschwindigkeit, wobei mit diesem Ausgangssignal anschließend in Vorwärtsrichtung die Anpassung an die Leistungscharakteristik des Fahrzeugs anhand der Progressionsfaktorstufe 8, 11 vorgenommen wird. Die anschließende Leistung/Moment-Kennfeldstufe 16, 18 transformiert den von der zugehörigen Reglereinheit 7, 10 ermittelten Stellwert unter Berücksichtigung der Motordrehzahl auf die Momentenebene und schafft dabei eigenstabilisierende Betriebsbedingungen, wie sie bei der herkömmlichen Geschwindigkeitsregelung und -begrenzung mit Drosselklappenstellungsvorgabe vorliegen.

Wie an dem oben erläuterten Beispiel deutlich wird, besitzt die erfindungsgemäße Fahrzeugmotorsteuerungsvorrichtung eine Reihe signifikanter Vorteile. Zum einen kann die äußerst bewährte Struktur herkömmlicher Geschwindigkeitsregel- und Geschwindigkeitsbegrenzungseinrichtungen, die auf der Drosselklappenstellungs-, d.h. Motorleistungsebene arbeiten und gleichermaßen für Diesel- und Ottomotor geeignet sind, unverändert übernommen werden. Es ist dabei unerheblich, ob es sich um einen Saugmotor mit eindeutiger Zuordnung zwischen Motorleistung und Drosselklappenöffnung, um einen Ladermotor, bei dem die Leistung trotz zurückgenommener Drosselklappenöffnung ansteigen kann, um einen Ottomotor mit Direkteinspritzung, bei dem in weiten Betriebs Bereichen die Drosselklappe voll geöffnet ist, oder um einen Motor mit irgend-einer anderen Luftsteuerung handelt. Die erfindungsgemäße Motorsteuerungsstruktur ist auch dann einsetzbar, wenn das Motormoment keine geeignete Regelgröße ist und letztere daher von einer anderen Größe gebildet wird. Die Momentenstruktur der Motorsteuerung kann ganz nach motorischen Gesichtspunkten gestaltet und optimiert werden, ohne daß dem Strukturerfordernisse der Geschwindigkeitsregelung bzw. -begrenzung entgegenstehen. Alle Vorteile einer solchen Momentenstruktur können genutzt werden, weil in der Hauptwirkungskette der Steuerung keine der Drosselklappenstellungsebene entsprechende Stabilität nachgebildet werden muß. Die Arbeitsebene von Fahrpedal- und Reglervorgaben zeichnet sich durch eine exakte Erkennung aus, welche der Sollwertvorgaben momentan greift. Zudem sind Übernahmen von einem Wikungspfad zum anderen eindeutig, und es sind präzise Reglerinitialisierungen möglich. Die Streckenverstärkung der Regelstrecke entspricht demjenigen auf Drosselklappenstellungsebene und ist höher als auf der Momentenebene, und zwar unabhängig davon, welcher Reglertyp, z.B. ein P-, PI-, PID- oder PDT1-Regler, verwendet wird.

Ein weiterer Vorteil der erfindungsgemäßen Vorrichtung besteht darin, daß sie die Erzeugung eines Sollstellungssignals für eine Getriebesteuerung auch bei aktiver Geschwindigkeitsregelung oder -begrenzung auf Fahrpedalstellungsebene erlaubt, d.h. praktisch identisch zum Fahrpedalstellungssignal, so daß die Schaltcharakteristik des Getriebes bei Aktivierung der Geschwindigkeitsregelung oder-begrenzung trotz momentenbasierter Motorsteuerung nicht verändert wird. Außerdem finden alle motorischen Adaptionsvorgänge, wie hinsichtlich Luftdruck, Temperatur und Reibverhältnisse, eine der Fahrzeugführung über das Fahrpedal gleichartige Berücksichtigung bei Aktivierung der Geschwindigkeitsregelung bzw. -begrenzung, was durch eine Anbindung der Geschwindigkeitsregelstufe bzw. der Geschwindigkeitsbegrenzungsstufe an einer anderen als der erfindungsgemäßen Stelle in der Motorsteuerungs-Momentenstruktur nicht in diesem Umfang möglich ist, da dann diese Adaptionen ganz oder teilweise nicht wirksam werden könnten.

## Patentansprüche

1. Fahrzeugmotorsteuerungsvorrichtung mit
- einem fahrerbetätigten Motorbetriebsvorgabe-Bedienelement und
- einer Geschwindigkeitsregelstufe (5), welche die Fahrgeschwindigkeit unter Verwendung eines motorleistungsbezögenen Sollvorgabesignals (14a) und Abgabe eines motorleistungsbezogenen Geschwindigkeitsregel-Stellsignals (15) regelt,
**gekennzeichnet durch**
- eine Momentenkennfeldstufe (2), welche abhängig von der Betätigung des Motorbetriebsvorgabe-Bedienelementes und einer Motordrehzahlinformation (N) ein zugehöriges motormomentbezogenes Sollvorgabesignal (4) abgibt,
- eine der Geschwindigkeitsregelstufe (5) eingangsseitig zugeordnete Moment/Leistung-Kennfeldstufe (13a), die aus dem motormomentbezogenen Sollvorgabesignal (4) motordrehzahlabhängig das motorleistungsbezogene Sollvorgabesignal (14a) bestimmt, und
- eine der Geschwindigkeitsregelstufe (5) ausgangsseitig zugeordnete Leistung/Moment-Kennfeldstufe (16) zur Transformation des motorleistungsbezogenen Geschwindigkeitsregel-Stellsignals (15) in ein motormomentbezogenes Geschwindigkeitsregel-Stellsignal (17).

2. Fahrzeugmotorsteuerungsvorrichtung, insbesondere nach Anspruch 1, mit
- einem fahrerbetätigten Motorbetriebsvorgabe-Bedienelement und
- einer Geschwindigkeitsbegrenzungsstufe (6), welche die Fahrgeschwindigkeit unter Verwendung eines motorleistungsbezogenen Sollvorgabesignals (14b) und Abgabe eines motorleistungsbezogenen Geschwindigkeitsbegrenzungs-Stellsignals (19) begrenzt,
**gekennzeichnet durch**
- eine Momentenkennfeldstufe (2), welche abhängig von der Betätigung des Motorbetriebsvorgabe-Bedienelementes und einer Motordrehzahlinformation (N) ein motormomentbezogenes Sollvorgabesignal (4) abgibt,
- eine der Geschwindigkeitsbegrenzungsstufe (6) eingangsseitig zugeordnete Moment/Leistung-Kennfeldstufe (13b), die aus dem motormomentbezogenen Sollvorgabesignal (4) motordrehzahlabhängig das motorleistungsbezogene Sollvorgabesignal (14b) bestimmt, und
- eine der Geschwindigkeitsbegrenzungsstufe (6) ausgangsseitig zugeordnete Leistung/Moment-Kennfeldstufe (18) zur Transformation des motorleistungsbezogenen Geschwindigkeitsbegrenzungs-Stellsignals (19) in ein motormomentbezogenes Geschwindigkeitsbegrenzungs-Stellsignal (20).

3. Fahrzeugmotorsteuerungsvorrichtung nach Anspruch 1 und 2, weiter
**gekennzeichnet durch**
- eine Maximalauswahlstufe (21), der das von der Momentenkennfeldstufe (2) abgegebene, motormomentenbezogene Sollvorgabesignal (4) und das motormomentenbezogene Geschwindigkeitsregel-Stellsignal (17) zugeführt sind und die das größere der beiden Signale als Ausgangssignal (22) weiterleitet, und
- eine Minimalauswahlstufe (23), welcher das Ausgangssignal (22) der Maximalauswahlstufe (21) und das motormomentenbezogene Geschwindigkeitsbegrenzungs-Stellsignal (20) zugeführt sind und die das größere der beiden Signale als Motormomentstellsignal (24) abgibt.

4. Fahrzeugmotorsteuerungsvorrichtung nach einem der Ansprüche 1 bis 3, weiter
**gekennzeichnet durch**
- einen Schalter (26), der bei inaktiver Geschwindigkeitsregelung und inaktiver Geschwindigkeitsbegrenzung ein für die Betätigung des Motorbetriebsvorgabe-Bedienelementes repräsentatives Signal (1) und bei aktiver Geschwindigkeitsregelung oder Geschwindigkeitsbegrenzung ein die Wirkung der Geschwindigkeitsregelung bzw. Geschwindigkeitsbegrenzung repräsentierendes Signal (27) als ein Sollwertsignal (25) für eine elektrische Getriebesteuerung abgibt, und
- eine Getriebesteuerungs-Kennfeldstufe (28), die das Signal (27) für die Getriebesteuerung, welches die Wirkung der Geschwindigkeitsregelung und/oder der Geschwindigkeitsbegrenzung repräsentiert, aus einem Motormomentstellsignal (24) motordrehzahlabhängig bestimmt.

5. Fahrzeugmotorsteuerungsvorrichtung nach Anspruch 1 oder 2,
**dadurch gekennzeichnet,**
**daß** sowohl das motorleistungsbezogene Sollvorgabesignal (14a; 14b) als auch das motorleistungsbezogene Geschwindigkeitsregel - Stellsignal (15) bzw. Geschwindigkeitsbegrenzungs - Stellsignal (19) auf Fahrpedalstellungsebene bezogene Signale darstellen.

6. Fahrzeugmotorsteuerungsvorrichtung nach Anspruch 1 oder 2,
**dadurch gekennzeichnet,**
**daß** sowohl das motorleistungsbezogene Sollvorgabesignal (14a; 14b) als auch das motorleistungsbezogene Geschwindigkeitsregel - Stellsignal (15) bzw. Geschwindigkeitsbegrenzungs - Stellsignal (19) auf Drosselklappenstellungsebene bezogene Signale darstellen.

## Claims

1. A vehicle engine valve timing device with
- a driver-actuated engine operation predetermining control element and
- a speed control stage (5) which controls the vehicle speed using an engine power-related reference predetermining signal(14a) and emission of an engine power-related speed control actuating signal (15),
**characterised by**
- a torque characteristic map stage (2) which emits a corresponding engine torque-related reference predetermining signal(4) dependent upon the actuation of the engine operation predetermining control element and an engine speed data item (N),
- a torque/power characteristic map stage (13a) assigned to the input side of the speed control stage (5) which determines the engine power-related reference predetermining signal(14a) from the engine torque-related reference predetermining signal(4) dependent upon engine speed, and
- a power/torque characteristic map stage (16) assigned to the output side of the speed control stage (5) to transform the engine power-related speed control actuating signal (15) into an engine torque-related speed control actuating signal (17).

2. A vehicle engine valve timing device, in particular in accordance with claim 1, with
- a driver-actuated engine operation predetermining control element and
- a speed limitation stage (6) which limits the vehicle speed using an engine power-related reference predetermining signal(14b) and emission of an engine power-related speed limitation actuating signal (19),
**characterised by**
- a torque characteristic map stage (2) which emits a corresponding engine torque-related reference predetermining signal(4) dependent upon the actuation of the engine operation predetermining control element and an engine speed data item (N),
- a torque/power characteristic map stage (13b) assigned to the input side of the speed limitation stage (6) which determines the engine power-related reference predetermining signal(14b) from the engine torque-related reference predetermining signal(4) dependent upon engine speed, and
- a power/torque characteristic map stage (18) assigned to the output side of the speed limitation stage (6) to transform the engine power-related speed limitation actuating signal (19) into an engine torque-related speed limitation actuating signal (20).

3. A vehicle engine valve timing device in accordance with claims 1 and 2, further
**characterised by**
- a maximum selection stage (21) to which the engine torque-related reference predetermining signal(4) emitted by the torque characteristic map stage (2) and the engine torque-related speed control actuating signal (17) are fed and which forwards the greater of the two signals as an output signal (22), and
- a minimum selection stage (23) to which the output signal (22) from the maximum selection stage (21) and the engine torque-related speed limitation actuating signal (20) are fed and which emits the greater of the two signals as an engine torque actuating signal (24).

4. A vehicle engine valve timing device in accordance with one of claims 1 to 3, further
**characterised by**
- a switch (26) which when both the speed control system and the speed limitation system are inactive emits a signal (1) representative of the actuation of the engine operation predetermining control element, and when either the speed control system or the speed limitation system are active emits a signal (27) representative of the effect of the speed contol or speed limitation system as a set-point signal (25) for an electric transmission control system, and
- a transmission control system characteristic map stage (28) which determines the signal (27) for the transmission control system which represents the effect of the speed control and/or speed limitation system from an engine torque actuating signal (24) dependent upon engine speed.

5. A vehicle engine valve timing device in accordance with claim 1 or 2, further
**characterised in that**
both the engine power-related reference predetermining signal(14a; 14b) and the engine power-related speed control actuating signal (15)/speed limitation actuating signal (19) represent signals at accelerator pedal position level.

6. A vehicle engine valve timing device in accordance with claim 1 or 2, further
**characterised in that**
both the engine power-related reference predetermining signal(14a; 14b) and the engine power-related speed control actuating signal (15)/speed limitation actuating signal (19) represent signals at throttle valve position level.

## Revendications

1. Dispositif de commande de moteur de véhicule comportant :
- un élément de service preserivant l'exploitation du moleur, manoeuvré par le conducteur et
- un étage de régulation de la vitesse (5) qui régule la vitesse de marche du véhicule en utilisant un signal de prescription rapporté à la puissance du moteur (14a) et en émettant un signal réglant de régulation de la vitesse rapporté à la puissance du moteur, (15),
**caractérisé par**
- un étage de caractéristiques du couple moteur (2) qui, en fonction de la manoeuvre de l'élément de service prescrivant l'exploitation du moteur et d'une information concernant la vitesse de rotation du moteur (N), émet un signal de prescription rapporté au couple moteur correspondant, (4),
- un étage de caractéristiques couple/puissance (13a) qui est associé, côté entrée, à l'étage de régulation de la vitesse (5) et qui, à partir du signal de prescription rapporté au couple moteur (4), détermine, en fonction de la vitesse de rotation du moteur, le signal de prescription rapporté à la puissance du moteur (14a) et
- un étage de caractéristiques puissance/couple (16), associé côté sortie, à l'étage de régulation de la vitesse (5), pour la transformation du signal réglant de régulation de la vitesse rapporté à la puissance du moteur (15) en un signal réglant de régulation de la vitesse rapporté au couple moteur (17).

2. Dispositif de commande de moteur de véhicule, en particulier selon la revendication 1, comportant :
- un élément de service prescrivant l'exploitation du moteur, manoeuvré par le conducteur et
- un étage de limitation de la vitesse (6) qui limite la vitesse de marche du véhicule en utilisant un signal de prescription rapporté à la puissance du moteur (14b) et en émettant un signal réglant de limitation de la vitesse rapporté à la puissance du moteur. (19),
**caractérisé par**
- un étage de caractéristiques du couple moteur (2) qui, en fonction de la manoeuvre de l'élément de service prescrivant l'exploitation du moteur et d'une information concernant la vitesse de rotation du moteur (N), émet un signal de prescription rapporté au couple moteur (4),
- un étage de caractéristiques couple/puissance (6) qui est associé, côté entrée, à l'étage de limitation de la vitesse (13b) et qui, à partir du signal de prescription rapporté au couple moteur (4), détermine, en fonction de la vitesse de rotation du moteur, le signal de prescription rapporté à la puissance du moteur (14b) et
- un étage de caractéristiques puissance/couple (18), associé côté sortie, à l'étage de limitation de la vitesse (6), pour la transformation du signal réglant de limitation de la vitesse rapporté à la puissance du moteur (19) en un signal réglant de limitation de la vitesse rapporté au couple moteur (20).

3. Dispositif de commande de moteur de véhicule selon les revendications 1 et 2, **caractérisé en outre par**
- un étage de sélection du maximum (21) auquel sont amenés le signal de prescription rapporté au couple moteur, émis par l'étage de caractéristiques du couple (2), et le signal réglant de régulation de la vitesse rapporté au couple moteur (17) et qui transmet le plus grand des deux signaux comme signal de sortie (22), et
- un étage de sélection du minimum (23) auquel sont amenés le signal de sortie (22) de l'étage de sélection du maximum (21) et le signal réglant de limitation de la vitesse rapporté au couple moteur (20) et qui émet le plus grand des deux signaux comme signal réglant du couple moteur (24).

4. Dispositif de commande de moteur de véhicule selon l'une des revendications 1 à 3, **caractérisé en outre par**
- un commutateur (26) qui, la régulation de vitesse étant inactive et la limitation de vitesse étant inactive, émet un signal (1) représentatif pour la manoeuvre de l'élément de service prescrivant l'exploitation du moteur et, la régulation de vitesse ou la limitation de vitesse étant active, émet un signal (27) représentant l'action de la régulation de vitesse ou de la limitation de vitesse en tant que signal de valeur prescrite (25) pour une commande électrique de la boîte de vitesses et
- un étage de caractéristiques de la commande de la boîte de vitesses (28) qui, à partir d'un signal réglant du couple moteur (24) détermine, en fonction de la vitesse de rotation du moteur, le signal (27), pour la commande de la boîte de vitesses, qui représente l'action de la régulation de la vitesse et/ou de la limitation de la vitesse.

5. Dispositif de commande de motcur de véhicule selon la revendication 1 ou 2, **caractérisé par le fait qu'**aussi bien le signal de prescription rapporté à la puissance du moteur (14a ; 14b) que le signal réglant la régulation de la vitesse rapporté à la puissance du moteur (15) ou que le signal réglant la limitation de la vitesse (19) représentent des signaux rapportés à la position de la pédale d'accélérateur.

6. Dispositif de commande de moteur de véhicule selon la revendication 1 ou 2, **caractérisé par le fait qu'**aussi bien le signal de prescription rapporté à la puissance du moteur (14a ; 14b) que le signal réglant la régulation de la vitesse rapporté à la puissance du moteur (15) ou que le signal réglant la limitation de la vitesse (19) représentent des signaux rapportés à la position du papillon des gaz.
